# EUROPÄISCHE PATENTSCHRIFT

(11) **EP 0 759 865 B1**
(45) Veröffentlichungstag und Bekanntmachung des Hinweises auf die Patenterteilung: **08.03.2000**
(21) Anmeldenummer: 95920039.5
(22) Anmeldetag: 15.05.1995
(51) Int. Cl.: B60T 13/52, B60T 13/44, B60T 17/02

(54) **BREMSANLAGE FÜR KRAFTFAHRZEUGE MIT PNEUMATISCHEM BREMSKRAFTVERSTÄRKER**
BRAKE SYSTEM FOR MOTOR VEHICLES WITH PNEUMATIC BRAKE BOOSTER
SYSTEME DE FREINAGE POUR VEHICULES A MOTEUR A SERVOFREIN PNEUMATIQUE

(30) Priorität: 16.05.1994 DE 4416833
(43) Veröffentlichungstag der Anmeldung: 05.03.1997
(73) Patentinhaber: Continental Teves AG & Co. oHG, 60488 Frankfurt (DE)
(72) Erfinder: LÜTTEKE, Harald, D-61191 Rosbach (DE); BÖHM, Peter, D-61381 Friedrichsdorf (DE); DROTT, Peter, D-65936 Frankfurt am Main (DE); FEIGEL, Hans-Jörg, D-61191 Rosbach (DE); KAHRS, Manfred, D-65207 Wiesbaden (DE); RIETH, Peter, D-65343 Eltville (DE)
(86) Internationale Anmeldenummer: EP9501828
(87) Internationale Veröffentlichungsnummer: WO9531362

(56) Entgegenhaltungen:
- DE-A- 3 203 400
- DE-A- 3 322 176
- US-A- 3 950 946
- US-A- 4 291 612

## Beschreibung

Die vorliegende Erfindung betrifft eine Bremsanlage für Kraftfahrzeuge mit einem pneumatischen Bremskraftverstärker mit zwei Kammern, von denen eine mit einem niedrigeren und die andere mit einem höheren Druck beaufschlagbar sind und von denen mindestens eine mit einer pneumatischen Pumpe verbindbar ist, wobei Mittel vorgesehen sind, die die Pumpe in Abhängigkeit von dem in der ihr zugeordneten Kammer herrschende Druck an- bzw. abschalten. Eine derartige Bremsanlage ist aus der DE-OS 32 03 400 bekannt. Der pneumatischen Pumpe ist ferner ein separater elektrischer Antriebsmotor zugeordnet, welcher an das Kraftfahrzeugbordnetz anschließbar ist. Ferner ist der Bremskraftverstärker mit einer Rohrleitung mit einem Ansaugrohr verbunden. Die pneumatische Pumpe tritt in Funktion, wenn im Ansaugrohr eines Kraftfahrzeugmotors kein ausreichender Unterdruck erzeugt wird.

Schließlich ist aus der DE 27 16 471 eine Bremsanlage bekannt, bei der eine Luftdruckpumpe über ein elektrisch betätigbares Magnetventil mit einer Kammer höheren Druckes eines Bremskraftverstärkers verbindbar ist. Über eine getaktete elektrische Ansteuerung des Magnetventils wird der in der genannten Kammer herrschende Druck eingestellt. Eine Kammer niedrigeren Druckes ist direkt mit einer Unterdruckpumpe verbunden.

Als nachteilig an dieser bekannten Bremsanlage ist die Verwendung eines Magnetventils anzusehen, welches aufwendig und teuer ist und zur Ansteuerung eine elektrische oder elektronische Steuer- bzw. Regeleinheit erfordert. Sowohl die Luftdruckpumpe als auch die Unterdruckpumpe sind als ununterbrochen arbeitende Pumpen ausgelegt, die stets den maximal möglichen Über- bzw. Unterdruck aufbauen. Dies hat einen hohen Energieverbrauch zur Folge, da in jedem Betriebszustand der Bremsanlage die volle Pumpenleistung erbracht werden muß.

Aufgabe der vorliegenden Erfindung ist es daher, die angegebenen Mängel zu beheben, d.h. eine kostengünstige, energiesparende und einfache gattungsgemäße Bremsanlage vorzuschlagen.

Diese Aufgabe wird dadurch gelöst, daß daß die pneumatische Pumpe von einem eine hydraulische Pumpe einer schlupfregelten Bremsanlage antreibenden Elektromotor angetrieben wird.

Dadurch ergibt sich der Vorteil, daß aufeinen zusätzlichen Motor verzichtet werden kann. Es ist ferner eine einfache, kostengünstige Bauweise möglich. Dabei kann die pneumatische Pumpe direkt an den Motor der schlupfgeregelten Bremsanlage gekoppelt sein und über pneumatische Leitungen mit dem Bremskraftverstärker in Verbindung stehen oder aber beispielsweise über eine biegsame Welle angetrieben, in einem gewissen Abstand zum Motor angeordnet sein. Dies ermöglicht eine flexiblere Nutzung des vorhandenen Bauraums.

Besonders sinnvoll ist es ferner, die Pumpe in Abhängigkeit von dem in der ihr zugeordneten Kammer herrschenden Druck an- bzw. abzuschalten, da sie dann bedarfsabhängig, d.h. immer dann betrieben wird, wenn das in der Kammer herrschende Druckniveau einen erforderlichen Mindest- bzw. Höchstwert unter- bzw. überschreitet. Auf diese Weise wird sichergestellt, daß immer das erforderliche Druckniveau zur Verfügung steht und gleichzeitig ein energiesparender Betrieb der Pumpe ermöglicht, da diese tatsächlich nur dann in Betrieb genommen wird, wenn dies erforderlich ist.

Besonders einfach läßt sich der Antrieb der pneumatischen Pumpe an- bzw. abschalten, wenn ein Elektromotor vorgesehen ist und die schaltenden Mittel durch einen elektrischen Druckschalter gebildet sind. Der Druckschalter schließt oder unterbricht die Stromzufuhr des Elektromotors in Abhängigkeit von dem in der zugeordneten Kammer herrschenden Druck. Sinnvollerweise weisen die Druckschalter eine Hysterese auf, was ein dauerndes An- und Abschalten des Elektromotors im Bereich des zum Schalten erforderlichen Druckniveaus verhindert.

Eine weitere vorteilhafte Möglichkeit, die Pumpe in Abhängigkeit von dem in der zugeordneten Kammer herrschenden Druck an- bzw. abzuschalten besteht gemäß Anspruch 2 darin, einen die Leistungsaufnahme des Elektromotors registrierenden Sensor in dessen Stromversorgung einzubauen, und die Pumpe in Abhängigkeit von dessen Ausgangssignal zu steuern. Beispielsweise kann dazu ein Stromsensor vorgesehen sein, dessen sich änderndes Signal bei konstanter an dem Elektromotor anliegender Spannung einer sich ändernden Leistungsaufnahme der Pumpe entspricht.

Bei einem bestimmten Wert der Leistungsaufnahme kann dann die Pumpe abgeschaltet, und beispielsweise nach einem bestimmten Zeitintervall wieder angeschaltet werden. Auf die Anordnung von elektrischen Druckschaltern kann somit verzichtet werden.

Eine zwischen der Pumpe und der ihr zugeordneten Kammer vorgesehene pneumatische Ventilanordnung gemäß Anspruch 3, welche durch den in der Kammer herrschenden Druck betätigbar ist und in einer ersten Schaltstellung eine Verbindung zwischen Pumpe und Kammer herstellt sowie in einer zweiten Schaltstellung die Pumpe von der Kammer trennt, hat den Vorteil, daß sie nicht elektrisch angesteuert werden muß, d.h. ausfallsicher ist. Die erste Schaltstellung wird eingenommen, solange der Druck in der Kammer das für eine einwandfreie Funktion des pneumatischen Bremskraftverstärkers erforderliche Niveau noch nicht erreicht hat. Sobald dieses Niveau erreicht ist, wird das Ventil durch den in der Kammer herrschenden Druck geschaltet, beispielsweise gegen eine Federvorspannung, und nimmt dann die zweite Schaltstellung ein. In dieser Schaltstellung ist die Pumpe von der Kammer getrennt, d.h. sie läuft ohne Last im Leerlauf. Dadurch sinkt die Leistungsaufnahme der Pumpe, die von einem im Kraftfahrzeug vorhandenen elektrischen Motor angetrieben wird.

Gemäß Patentanspruch 4 wird die Saugseite der Überdruckpumpe in einer ersten Schaltstellung der Ventilanordnung mit einer Kammer niedrigeren Druckes und in einer zweiten Schaltstellung mit Atmosphäre verbunden. Auf diese Weise wird eine mit geringer Leistungsaufnahme einhergehende Leerlaufschaltung der Überdruckpumpe erzielt.

Anspruch 6 sieht vor, einen Druckspeicher an die pneumatische Kammer anzuschließen. Besonders sinnvoll ist dies bei der Verwendung einer Überdruckpumpe, da dann der erzeugte Überdruck in dem Druckspeicher gespeichert und bei Bedarf entnommen werden kann. In diesem Fall ist die Verwendung eines herkömmlichen Vakuumbremskraftverstärkers möglich, der nur geringfügig modifiziert werden muß. Der Druckspeicher wird an die Stelle der üblichen Atmosphärenverbindung angeschlossen, während die Kammer niedrigeren Druckes, die üblicherweise evakuiert wird, sowohl an Atmosphäre als auch an die Saugseite der Pumpe angeschlossen werden kann.

Im allgemeinen dient der Bremskraftverstärker selbst als Unterdruckspeicher. Soll der pneumatische Bremskraftverstärker selbst als Überdruckspeicher verwendet werden, so muß dieser im allgemeinen im Aufbau entsprechend angepaßt werden, was zusätzlichen Konstruktionsaufwand bedeutet. Bei der Verwendung eines Überdruckspeichers kann ein herkömmlicher, eventuell leicht modifizierter Bremskraftverstärker Verwendung finden.

Eine Bildung von Kondenswasser in der Ventilanordnung kann durch die Anordnung eines Lufttrockners auf der Druckseite der Pumpe gemäß Anspruch 7 verhindert werden. Eine saugseitige Anordnung des Lufttrockners ermöglicht zusätzlich einen Schutz der Pumpe selbst vor Kondenswasser.

Vorteilhafterweise sieht Anspruch 8 vor, die Ventilanordnung bzw. die Ventilanordnungen in den pneumatischen Bremskraftverstärker zu integrieren. Dabei kann die Ventilanordnung entweder vollständig oder teilweise innerhalb des Bremskraftverstärkergehäuses angeordnet sein. Beispielsweise können in der Außenhaut des Bremskraftverstärkers Einbuchtungen vorgesehen sein, in die die Ventilanordnung eingepaßt sein kann. Dies würde nur eine geringe Modifikation eines herkömmlichen standardmäßigen Bremskraftverstärkers erfordern. Die Ventilanordnung kann aber auch in eine Öffnung im Verstärkergehäuse geschoben werden, in der sich üblicherweise der Unterdruckanschluß befindet Auf ähnliche Weise kann auch die Pumpe in den Bremskraftverstärker integriert sein.

Sinnvollerweise ist gemäß Anspruch 10 der pneumatische Druckspeicher in das Gehäuse des Bremskraftverstärkers integriert. Insbesondere in der Kammer niedrigeren Druckes befinden sich Toträume, die im Betrieb nicht genutzt werden, und in die der Überdruckspeicher integriert werden kann. Dabei ist sowohl ein vollständig im Gehäuse des Bremskraftverstärkers angeordneter als auch ein in von außen in Einbuchtungen des Gehäuses abgeordneter Überdruckspeicher denkbar, die Vorteile sind entsprechend wie oben beschrieben.

Ist nach Anspruch 11 zwischen hydraulischer Pumpe und Motor der schlupfgeregelten Bremsanlage ein Freilaufgetriebe angeordnet, so kann die hydraulische Pumpe, die zur Versorgung der schlupfgeregelten Bremsanlage mit Hydraulikmedium dient, über eine einfache Drehrichtungsumkehr des Motors von diesem abgekoppelt werden.

Dies führt zu Energieeinsparungen, da die hydraulische Pumpe seltener in Betrieb ist, und vermindert eine Abnutzung der hydraulischen Pumpe, d.h. ihre Lebensdauer wird erhöht. Im Fall einer schlupfgeregelten Bremsung muß lediglich die Drehrichtung des Motors umgekehrt werden, worauf sowohl die pneumatische als auch die hydraulische Pumpe angetrieben werden.

Nach Anspruch 13 sind Mittel vorgesehen, die die Pumpe in regelmäßigen Abständen an- bzw. abschalten. Dabei kann vorgesehen sein, die Pumpe in zeitlich regelmäßigen Abständen, beispielsweise alle zwei bis drei Minuten, für eine gewisse Zeit, beispielsweise 30 Sekunden, anzuschalten und in der Zwischenzeit ausgeschaltet zu lassen. Dies gewährleistet, daß stets ein ausreichendes Druckniveau zur Verfügung steht. Die Pumpe kann aber auch regelmäßig bei Betätigung des Bremspedals angeschaltet und, mit einer Hysterese versehen, beispielsweise bis 30 Sekunden nach Beendigung der Betätigung des Bremspedals laufen und nur in der Zwischenzeit, d.h. bei unbetätigtem Bremspedal, abgeschaltet sein. Eine Betätigung des Bremspedals kann über den Bremslichtschalter festgestellt werden, der bei betätigtem Bremspedal geschlossen ist. Der Bremslichtschalter kann beispielsweise ein Wegsensor oder auch ein Drucksensor sein. Dies gewährleistet, daß die Pumpe während eines Bremsvorganges dauernd fördert und somit während des Bremsvorgangs ununterbrochen das erforderliche Druckniveau erzeugt. Besonders sinnvoll ist es, die Pumpe sowohl bei Betätigung des Bremspedals als auch in der Zwischenzeit in regelmäßigen zeitlichen Abständen in Betrieb zu nehmen, da somit gewährleistet ist, daß bereits bei Beginn der Betätigung des Bremspedals ein ausreichendes Druckniveau zur Verfügung steht. Das An- und Abschalten der Pumpe kann beispielsweise über einen schaltbaren Freilauf erfolgen, wenn die Pumpe von einer ständig rotierenden Welle angetrieben wird. Die Pumpe kann aber auch elektromotorisch angetrieben sein.

Auf die Anordnung von pneumatischen Ventilen, die gegen Kondenswasser empfindlich sind, kann bei regelmäßig an- und abgeschalteter Pumpe ganz oder teilweise verzichtet werden.

Weitere vorteilhafte Einzelheiten der Erfindung ergeben sich aus Unteransprüchen im Zusammenhang mit der Beschreibung und der Zeichnung. Die Zeichnung verdeutlicht im wesentlichen den pneumatischen Teil der Fahrzeugbremsanlage und im einzelnen zeigt:
- Fig. 1: eine Bremsanlage mit Unterdruckpumpe,
- Fig. 2: eine Bremsanlage mit Überdruckpumpe,
- Fig. 3: eine Bremsanlage mit Überdruckpumpe und geschlossenem System,
- Fig. 4: eine Bremsanlage mit Unter-/ Überdruckpumpe,
- Fig. 5: eine erfindungsgemäße Bremsanlage mit elektromotorisch angetriebener Unterdruckpumpe,
- Fig. 6: eine Bremsanlage mit elektromotorisch angetriebener Unterdruckpumpe,
- Fig. 7: eine Bremsanlage mit elektromotorisch angetriebener Überdruckpumpe,
- Fig. 8: eine Bremsanlage mit elektromotorisch angetriebener Überdruckpumpe und geschlossenem System,
- Fig. 9: eine Bremsanlage mit elektromotorisch angetriebener Unter-/ Überdruckpumpe.

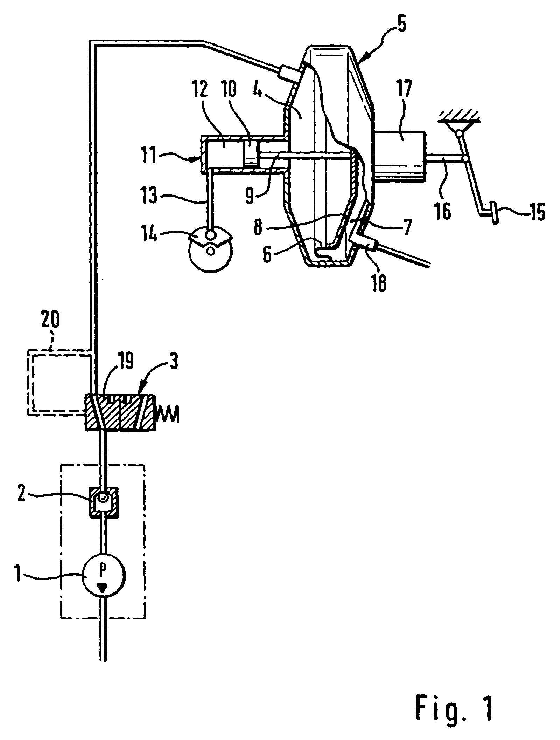

In Fig. 1 erkennt man eine Bremsanlage mit pneumatischer Unterdruckpumpe 1. Auf der Saugseite der Unterdruckpumpe 1 befindet sich ein Rückschlagventil 2. Das Rückschlagventil 2 ist über eine Ventilanordnung 3 mit einer Kammer 4 niedrigeren Druckes eines Bremskraftverstärkers 5 verbunden.

In dem schematisch dargestellten Bremskraftverstärker 5 wird die Kammer 4 niedrigen Druckes durch eine Membran 6 von einer Kammer 7 höheren Druckes getrennt. Die Membran 6 ist mit einem Arbeitskolben 8 verbunden, an dem eine Kolbenstange 9 befestigt ist. Am anderen Ende der Kolbenstange 9 ist ein Kolben 10 angebracht, der in einem hier ebenfalls nur schematisch abgebildeten Hauptzylinder 11 geführt ist und in diesem eine Arbeitskammer 12 begrenzt. Die Arbeitskammer 12 steht über hydraulische Bremsleitungen 13 mit Radbremsen 14 in Verbindung.

Bei einer Betätigung der Kolbenstange 9 wird der Kolben 10 in der Abbildung nach links verschoben, worauf Druckmittel aus der Arbeitskammer 12 in die Radbremsen 14 verdrängt wird. Dies führt zu einer Bremsung des Fahrzeugs. Eingeleitet wird ein derartiger Bremsvorgang durch die Betätigung eines Bremspedals 15, welches mit einer Druckstange 16 verbunden ist, die in das Ventilgehäuse 17 des Bremskraftverstärkers 5 mündet. Im Ventilgehäuse 17 befindet sich in bekannter, hier nicht näher beschriebener Weise ein Steuerventil, welches bei Betätigung der Druckstange 16 eine Verbindung zwischen der Kammer 7 höheren Druckes und der Atmosphäre über einen Druckanschluß 18 herstellt und bei unbetätigter Drucketange 16 eine Verbindung zwischen der Kammer 7 höheren und der Kammer 4 niedrigeren Druckes. Eine über die Druckstange 16 nach links aufgebrachte Kraft wird somit in bekannter Weise in eine verstärkte, auf die Kolbenstange 9 wirkende Ausgangskraft umgewandelt.

Die Ventilanordnung 3 ist als pneumatisch betätigbares 3/2-Wegeventil 19 ausgelegt, welches in seiner dargestellten ersten Schaltstellung die Kammer 4 mit der Unterdruckpumpe 1 verbindet. Das 3/2-Wegeventil 19 wird über die Steuerungsleitung 20 mit dem in der Kammer 4 niedrigeren Druckes herrschenden Druck beaufschlagt. Sinkt dieser Druck unter einen bestimmten, vorgegebenen Wert, so wird das 3/2-Wegeventil 19 entgegen seiner Vorspannung in eine zweite Schaltstellung verschoben, in der die Kammer 4 von der Unterdruckpumpe 1 getrennt ist, während die Saugseite der Unterdruckpumpe 1 mit Atmosphäre verbunden ist. Die Unterdruckpumpe 1 läuft somit im "Leerlauf", d.h. mit geringer Leistungsaufnahme. Sobald der Druck in der Kammer 4 einen bestimmten vorgegebenen Höchstwert überschreitet, schaltet das 3/2-Wegeventil 19 in seine erste Schaltstellung zurück, die Kammer 4 wird wieder über die Unterdruckpumpe 1 evakuiert. Um ein andauerndes Umschalten des 3/2-Wegeventils 19 zu verhindern, ist dieses mit einer geeigneten Hysterese ausgestattet.

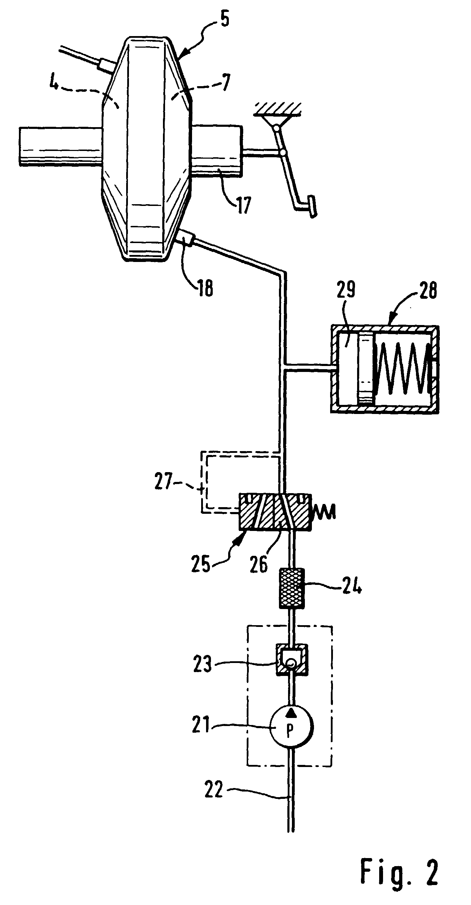

Fig. 2 zeigt eine erfindungsgemäße Bremsanlage mit Überdruckpumpe 21. Gleiche Bauteile sind mit den gleichen Bezugszeichen wie zu Fig. 1 versehen, ihre Funktion wird nur insoweit erläutert, als sie sich von der zu Fig. 1 beschriebenen unterscheidet.

Die Überdruckpumpe 21 steht über eine pneumatische Leitung 22 mit der Atmosphäre in Verbindung und fördert über ein Rückschlagventil 23 und einen Lufttrockner 24 Druckluft zur Ventilanordnung 25.

Die Ventilanordnung 25 besteht aus einem vorgespannten 3/2-Wegeventil 26, welches über die Steuerungsleitung 27 druckabhängig schaltbar ist. In seiner dargestellten ersten Schaltstellung verbindet das 3/2-Wegeventil 26 die Überdruckpumpe 21 mit dem zur Kammer 7 höheren Druckes führenden Druckanschluß 18, einem pneumatischen Druckspeicher 28 und der Steuerungsleitung 27. Überschreitet der in der Druckkammer 29 herrschende und somit der zur Beaufschlagung der Kammer höheren Druckes des Bremskraftverstärkers 5 zur Verfügung stehende Druck einen vorgegebenen Schwellenwert, so wird das 3/2-Wegeventil 26 über die Steuerungsleitung 27 gegen die Vorspannung in seine zweite Schaltstellung verschoben. In der zweiten Schaltstellung sind der Bremskraftverstärker 5 und der Druckspeicher 28 von der Überdruckpumpe 21 abgetrennt, deren Druckseite in dieser Schaltstellung mit Atmosphäre in Verbindung steht. Hiermit wird erreicht, daß bei ausreichendem an der Kammer 7 höheren Druckes des Bremskraftverstärkers 5 anstehendem Druck die Überdruckpumpe 21 im Leerlauf arbeitet, d.h. nur eine geringe Leistungsaufnahme hat.

Der Bremskraftverstärker 5 ist in Fig. 2 als modifizierter herkömmlicher Vakuum-Bremskraftverstärker vorgesehen, dessen Kammer 4 niedrigeren Druckes mit der Atmosphäre verbunden, und dessen Kammer 7 höheren Druckes über das im Ventilgehäuse 17 angeordnete Steuerventil wie zu Fig. 1 beschrieben mit Druckluft aus dem Druckspeicher 28 beaufschlagbar ist.

Auf den Druckspeicher 28 kann verzichtet werden, wenn die Überdruckpumpe 21 in der Lage ist, schnell ein zur Funktion des Bremskraftverstärkers erforderliches, ausreichendes Volumen an Druckluft unter einem entsprechend ausreichenden Druck zur Verfügung zu stellen.

Der Bremskraftverstärker 5 kann auch als Überdruckbremskraftverstärker ausgelegt sein, dessen beide Kammern 4,7 im Normalfall mit Druckluft gefüllt sind, und dessen Kammer 4 niedrigeren Druckes über das im Ventilgehäuse 17 angeordnete Steuerventil bei Bremsbetätigung mit Atmosphäre verbunden wird. Die sich dabei einstellende Druckdifferenz zwischen den Kammer 4 und 7 bestimmt den Verstärkungsfaktor.

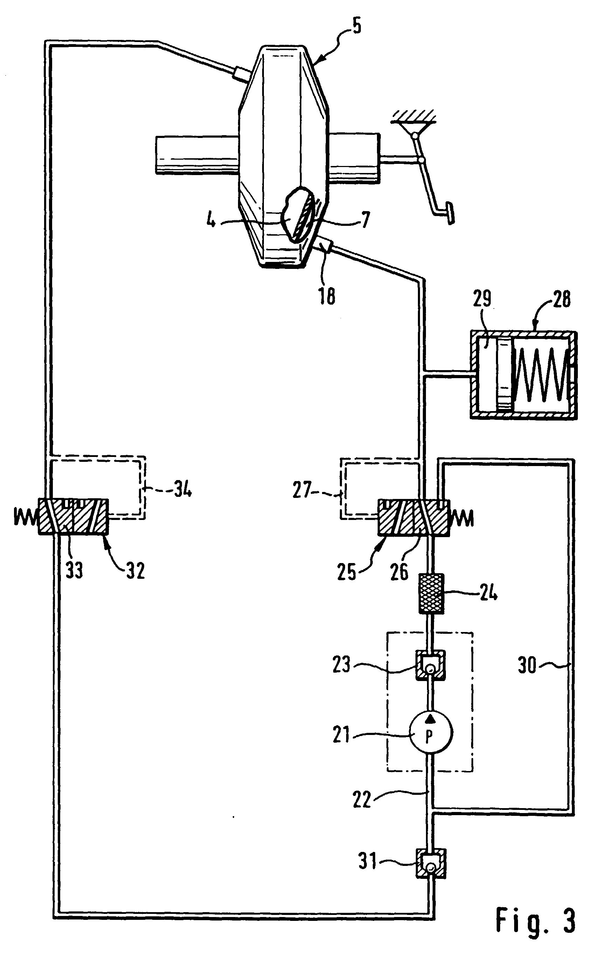

In Fig. 3 ist die zu einem geschlossenen System modifizierte Bremsanlage mit Überdruckpumpe aus Fig. 2 abgebildet. Auch hier sind wieder gleiche Bauteile mit gleichen Bezugszeichen versehen. Das 3/2-Wegeventil 26 ist über eine pneumatische Leitung 30 mit der Leitung 22 und somit mit der Saugseite der Überdruckpumpe 21 verbunden. Die Leitung 22 ist über ein in Richtung Überdruckpumpe 21 öffnendes Rückschlagventil 31 mit einer zweiten Ventilanordnung 32 verbunden. Diese besteht aus einem vorgespannten 3/2-Wegeventil, welches über eine Steuerungsleitung 34 pneumatisch betätigbar ist. In seiner dargestellten ersten Schaltstellung verbindet das 3/2-Wegeventil 33 das Rückschlagventil. 31 mit der Kammer 4 niedrigeren Druckes des Bremskraftverstärkers 5, während es in seiner zweiten Schaltstellung das Rückschlagventil 31 mit Atmosphäre verbindet und die Kammer 4 abtrennt. Die zweite Schaltstellung des 3/2-Wegeventils 33 wird dann eingenommen, wenn der Druck in Kammer 4 einen bestimmten Wert unterschreitet und somit über die Steuerungsleitung 34 das 3/2-Wegeventil 33 entgegen seiner Vorspannung in die zweite Schaltstellung verschoben wird.

Die in Fig. 3 dargestellte Bremsanlage stellt bezüglich der Druckluft/Unterdruckversorgung des Bremskraftverstärkers 5 ein geschlossenes System dar: Die Überdruckpumpe 21 fördert entweder Druckluft in den Vakuumbremskaftverstärker 5 bzw. den Druckspeicher 28 oder, wenn dort ein vorgegebener Druck erreicht ist, zurück zu ihrer Saugseite. Die Saugseite der Überdruckpumpe 21 steht somit entweder mit ihrer Druckseite oder über das Rückschlagventil 31 mit der Ventilanordnung 32 in Verbindung, die wiederum entweder eine Verbindung mit der Kammer 4 niedrigeren Druckes des Bremskraftverstärkers 5 oder mit Atmosphäre herstellt. Unterschreitet der Druck in der Kammer 4 einen gewissen Grenzwert, so schaltet das 3/2-Wegeventil 33 um und verbindet das Rückschlagventil 31 mit Atmosphäre. Dieses öffnet aber nur, wenn in der Leitung 22 ein unterhalb des Atmosphärendrucks liegender Druck herrscht, was nur dann der Fall ist, wenn Druckspeicher 28 bzw. die Kammer 7 höheren Druckes noch nicht vollständig gefüllt sind. Andernfalls verbindet die Ventilanordnung 32 die Überdruckpumpe 21 über die Leitung 30 mit ihrer Saugseite, was bedeutet, daß am Rückschlagventil 31 pumpenseitig ein höherer Druck anliegt als atmosphärenseitig. Es handelt sich somit um ein weitgehend geschlossenes System, der Lufttrockner 24 kann relativ klein dimensioniert werden, da nur geringe Mengen Feuchtigkeit in das Gesamtsystem eindringen können.

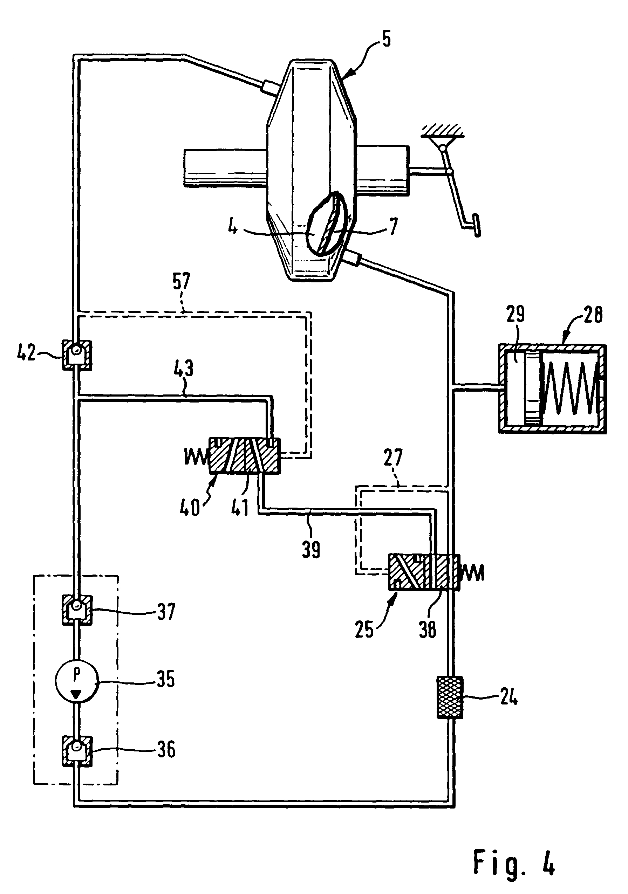

In Figur 4 ist eine erfindungsgemäße Bremsanlage mit Unter/Überdruckpumpe 35 abgebildet. Diese Pumpe ist sowohl in der Lage, druckseitig einen Überdruck als auch saugseitig einen Unterdruck (Druckabsenkung auf etwa 20% Atmosphärendruck möglich) aufzubauen. Dazu sind sowohl druck- als auch saugseitig Rückschlagventile 36,37 vorgesehen. Auch hier ist zwischen das druckseitige Rückschlagventil 36 und die Ventilanordnung 25 ein Lufttrockner 24 zwischengeschaltet. Die Ventilanordnung 25 ist als pneumatisch betätigbares, vorgespanntes 4/2-Wegeventil 38 ausgelegt. In seiner dargestellten ersten Schaltstellung verbindet das 4/2-Wegeventil 38 die Unter-/Überdruckpumpe 35 mit der Kammer 7 höheren Drucks des Bremskraftverstärkers 5 bzw. der Druckkammer 29 des Druckspeichers 28. Über eine Steuerungs-leitung 27 wird es von dem dort herrschenden Druck beaufschlagt. Sobald dieser einen vorgegebenen Wert überschreitet, nimmt das 4/2-Wegeventil 38 seine zweite Schaltstellung ein, in der Kammer 7 und Druckkammer 29 von der Unter-/Überdruckpumpe 35 abgetrennt sind, während diese über eine Leitung 39 mit einer weiteren Ventilanordnung 40 verbunden ist. In der zuvor erwähnten ersten Schaltstellung des 4/2-Wegeventils 38 ist die Ventilanordnung 40 mit Atmosphäre verbunden. Die Ventilanordnung 40 wird durch ein vorgespanntes, pneumatisch betätigbares 3/2-Wegeventil 41 gebildet, welches über eine Steuerungsleitung 57 mit dem in der Kammer 4 niedrigeren Druckes herrschenden Druck beaufschlagt wird. In seiner dargestellten ersten Schaltstellung verbindet das 3/2-Wegeventil 41 die Leitung 39 mit Atmosphäre, während es in seiner zweiten Schaltstellung, die es einnimmt, wenn der Druck in der Kammer 4 einen bestimmten Mindestwert unterschreitet, die Leitung 39 mit der Saugseite der Unter-/Überdruckpumpe 35 verbindet. Um in diesem Fall einen Druckaufbau in der Kammer 4 niedrigeren Druckes des Bremskraftverstärkers 5 zu verhindern, ist ein Rückschlagventil 42 zwischen einer zum 3/2-Wegeventil 41 führenden Leitung 43 und der Kammer 4 vorgesehen.

Werden die dargestellten Grundschaltstellungen der Ventile 38 bzw. 41 angenommen, so wird die Kammer 4 niedrigeren Druckes über die Unter-/Überdruckpumpe 35 evakuiert, während gleichzeitig Luft in die Kammer 7 höheren Druckes bzw. die Druckkammer 29 gefördert wird. Überschreitet der dort herrschende Druck einen bestimmten Wert, so schaltet das 4/2-Wegeventil 38 in seine zweite Schaltstellung, worauf die Pumpe in die Leitung 39 fördert. Solange das 3/2-Wegeventil 41 in seiner ersten Schaltstellung verbleibt, fördert die Unter-/Überdruckpumpe 35 somit in die Atmosphäre. Schaltet das 3/2-Wegeventil 41 in seine zweite Schaltstellung, d.h. unterschreitet der in der Kammer 4 herrschende Druck einen bestimmten Mindestwert, so werden Druck- und Saugseite der Unter-/Überdruckpumpe 35 kurzgeschlossen, d.h. diese befindet sich im Leerlauf und hat somit eine relativ niedrige Leistungsaufnahme. Befindet sich das 3/2-Wegeventil 41 in seiner zweiten Schaltstellung, das 4/2-Wegeventil 38 aber in seiner dargestellten ersten Schaltstellung, so steht die Saugseite der Unter-/Überdruckpumpe 35 über das 4/2-Wegeventil 38 mit Atmosphäre in Verbindung, während sie Luft in die Kammer 7 des Bremskraftverstärkers 5 bzw. die Druckkammer 29 des Druckspeichers 28 fördert. Das Rückschlagventil 42 verhindert in diesem Fall, daß Luft in die Kammer 4 niedrigeren Druckes gelangt.

Die in den Fig. 1 bis 4 gezeigten Bremsanlagen arbeiten vorteilhafterweise mit einer elektromotrisch angetriebenen Pumpe, da somit eine autarke, von anderen Antriebseinheiten unabhängige Einheit geschaffen wird.

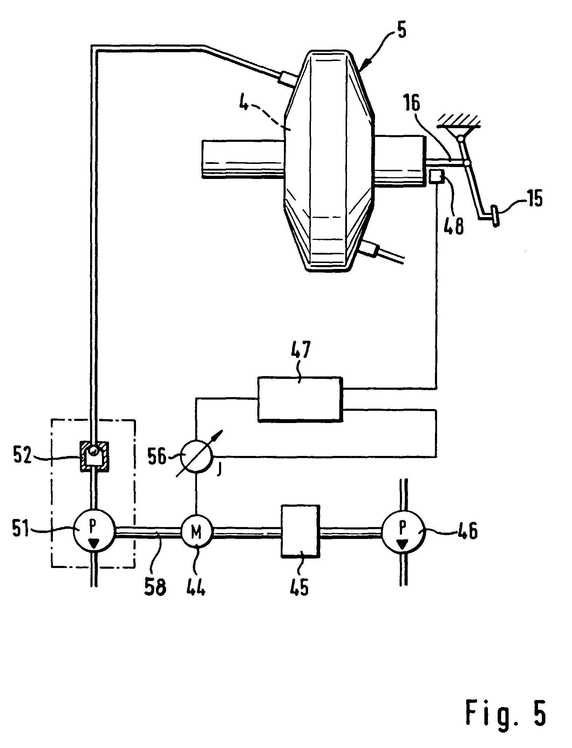

In Fig. 5 ist eine erfindungsgemäße Bremsanlage mit elektromotorisch angetriebener Unterdruckpumpe 51 dargestellt. Die Unterdruckpumpe 51 wird von einem Elektromotor 44 angetrieben, welcher über ein Freilaufgetriebe 45 eine hydraulische Pumpe 46 einer schlupfgeregelten Bremsanlage (ABS bzw. ABS/ASR) antreibt. Der Elektromotor 44 ist mit der Steuerungseinheit 47 der schlupfgeregelten Bremsanlage verbunden, und wird von dieser ein- bzw. ausgeschaltet. Dabei ist die Steuerungseinheit 47 weiterhin mit einem Bremslichtschalter 48 verbunden, der im Ausführungsbeispiel als ein die Bewegung der Druckstange 16 registrierender Bewegungssensor ausgelegt ist. Sobald über den Bremslichtschalter 48 eine Bewegung der Druckstange 16 registriert wird, d.h., sobald eine Bremsung eingeleitet wird, ist vorgesehen, daß der Elektromotor 44 über die Steuerungseinheit 47 mit Strom versorgt wird, so daß die Unterdruckpumpe 51 anläuft. Diese saugt über das Rückschlagventil 52 Luft aus der hier nicht näher dargestellten Kammer 4 niedrigeren Druckes des Bremskraftverstärkers 5 ab und stellt somit das erforderliche Unterdruckniveau her. Eine vorgegebene Hysterese sorgt dafür, daß die Unterdruckpumpe 51 auch noch eine gewisse Zeit nach der letzten Bewegung der Druckstange 16 nachläuft, um ein möglichst gutes Vakuum in der Kammer 4 für den nächsten Bremsvorgang bereitzustellen. Anstelle dieser Hysterese kann wahlweise ein Stromsensor 56 in der Stromversorgung des Elektromotors 44 angeordnet sein, dessen Ausgangssignal an die Steuerungseinheit 47 geleitet wird. Diese schaltet dann die Stromversorgung ab, wenn das Signal des Stromsensors 56 einer Leistungsaufnahme der Unterdruckpumpe 51 entspricht, die dem vorgegebenen Druckniveau entspricht. Entsprechende Stromsensoren können analog auch bei Überdruck- sowie Unter-/Überdruckpumpen eingesetzt werden. Zusätzlich kann vorgesehen sein, daß der Elektromotor 44 in bestimmten vorgegebenen Zeitabständen, beispielsweise alle zwei bis drei Minuten, kurzfristig angeschaltet wird, damit das in der Kammer 4 befindliche Vakuum auf einem möglichst optimalen Wert gehalten wird. Während eines Brems- bzw. Antriebsschlupfregelvorgangs läuft der Elektromotor 44 kontinuierlich, um über die hydraulische Pumpe 46 den für den Schlupfregelgang erforderlichen hydraulischen Druck bereitzustellen. Da in diesem Fall im allgemeinen auch das Bremspedal betätigt wird, ist es sinnvoll, daß die Unterdruckpumpe 51 in diesem Fall ebenfalls ununterbrochen läuft.

Die Unterdruckpumpe 41 und die hydraulische Pumpe 46 werden in diesem Fall direkt durch die Motorwelle 58 angetrieben, die z.B. mit entsprechenden Exzentern an ihren beiden Enden versehen ist. Die Enden ragen dabei aus dem hier nicht explizit dargestellten Gehäuse des Elektromotors 44 heraus.

Für den Fall, daß nur eine der beiden Pumpen 46 bzw. 51 an den Elekromotor 44 angeschlossen werden soll, ist vorgesehen, das ungenutzte Ende der Motorwelle 58 mittels eines Deckels abzudecken. Der Elektromotor 44 kann dann ungeändert übernommen werden, lediglich das ungenutzte Ende der beidseitig aus dem Gehäuse ragenden Motorwelle 58 wird durch ein einfaches Bauteil abgedeckt. Dies verhindert ein mögliches Eindringen von Schmutz, einen Kontakt fremder Teile mit dem rotierenden Exzenter und ermöglicht es, ggf. die andere Pumpe 51 bzw. 46 nachzurüsten.

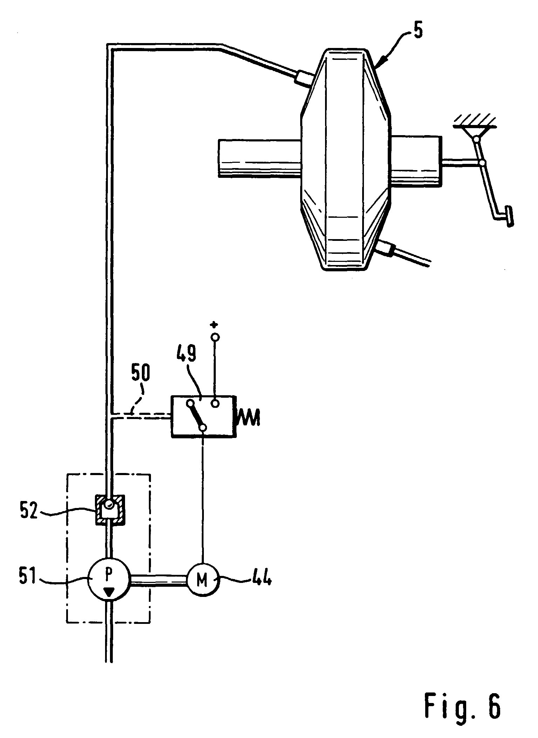

Das Freilaufgetriebe 45 ist optional vorgesehen. Ist kein Freilaufgetriebe 45 vorhanden, so laufen die Unterdruckpumpe 41 und die hydraulische Pumpe 46 immer gleichzeitig. Dies führt im allgemeinen nicht zu einem wesentlich erhöhten Energieverbrauch, da die hydraulische Pumpe 46 außerhalb eines Schlupfregelungsmodus im Leerlauf, d.h. im wesentlichen ohne Leistungsaufnahme, läuft. Das An- und Abschalten des Elektromotors 44 kann allerdings auch durch einen Unterdruckschalter, wie z.B. dem zu Fig. 6 beschriebenen erfolgen.

Soll aus Geräuschdämpfungsgründen oder aus Gründen einer geringeren Abnutzung von in der hydraulischen Pumpe 46 vorhandenen Bauteilen ein Mitlaufen der hydraulischen Pumpe 46 mit der Unterdruckpumpe 51 außerhalb eines Schlupfregelungsmodus verhindert werden, so ist das Freilaufgetriebe 45 vorgesehen, welches in einer Umdrehungsrichtung des Elektromotors 44 die hydraulische Pumpe 46 an diesen koppelt, während bei einer entgegengesetzen von Umdrehungsrichtung des Elektromotors 44 dieser von der hydraulischen Pumpe 46 entkoppelt ist (Freilauf). Die Drehrichtungsänderung kann beispielsweise über eine Umpolung der Anschlußklemmen des Elektromotors 44 erfolgen. Dies wird durch die Steuerungseinheit 47 bewerkstelligt, die dem Elektromotor 44 im normalen Bremstall mit der ersten Drehrichtung betreibt, in der er von der Pumpe 46 getrennt ist, während im Schlupfregelungs-modus ein Drehrichtungswechsel des Elektromotors 44 durch die Steuerungseinheit 47 eingeleitet wird.

In Fig. 6 ist eine erfindungsgemäße Bremsanlage mit Unterdruckpumpe ähnlich Fig. 5 dargestellt. Hier besteht keine Verknüpfung zu einer schlupfgeregelten Bremsanlage, der Elektromotor 44 wird über einen Druckschalter 49 in Abhängigkeit von dem in der Kammer 4 niedrigeren Druckes des Bremskraftverstärkers 5 herrschenden Druck an- bzw. abgeschaltet. Dazu ist der Druckschalter 49 über eine Steuerungsleitung 50 mit der Kammer 4 verbunden. Sobald der dort herrschende Druck einen bestimmten Wert überschreitet, wird der Elektromotor 44 über den Druckschalter 49 mit Strom versorgt und treibt die Pumpe 51 an, die die Kammer 4 wieder evakuiert. Ist ein ausreichendes Unterdruckniveau erreicht, so trennt der mit Hysterese versehene Druckschalter 49 den Elektromotor 44 wieder von der Stromversorgung. Zusätzlich kann vorgesehen sein, daß der Elektromotor 44 immer dann mit Strom versorgt wird, wenn, wie in Fig. 5 dargestellt, ein Bremslichtschalter 48 eine Bremsung signalisiert.

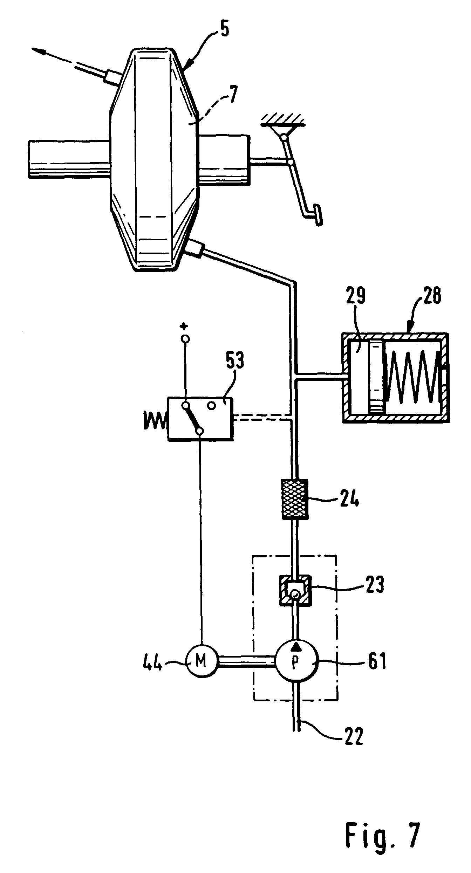

Fig. 7 zeigt eine erfindungsgemäße Bremsanlage mit elektromotorisch angetriebener Überdruckpumpe 61. Die Überdruckpumpe 61 fördert über ein Rückschlagventil 23 und einen Lufttrockner 24 Druckluft zum Bremskraftverstärker 5 bzw. zum Druckspeicher 28, wie vor beschrieben. Der in der Kammer 7 höheren Druckes des Bremskraftverstärkers 5 bzw. der Druckkammer 29 herrschende Druck steuert einen Druckschalter 53 an, der oberhalb eines bestimmten Druckwertes den Elektromotor 44 von der Stromversorgung trennt, und ihn unterhalb eines bestimmten Druckwertes mit der Stromversorgung verbindet. Die Überdruckpumpe 61 fördert in diesem Fall Luft aus der Atmosphäre in den Bremskraftverstärker 5.

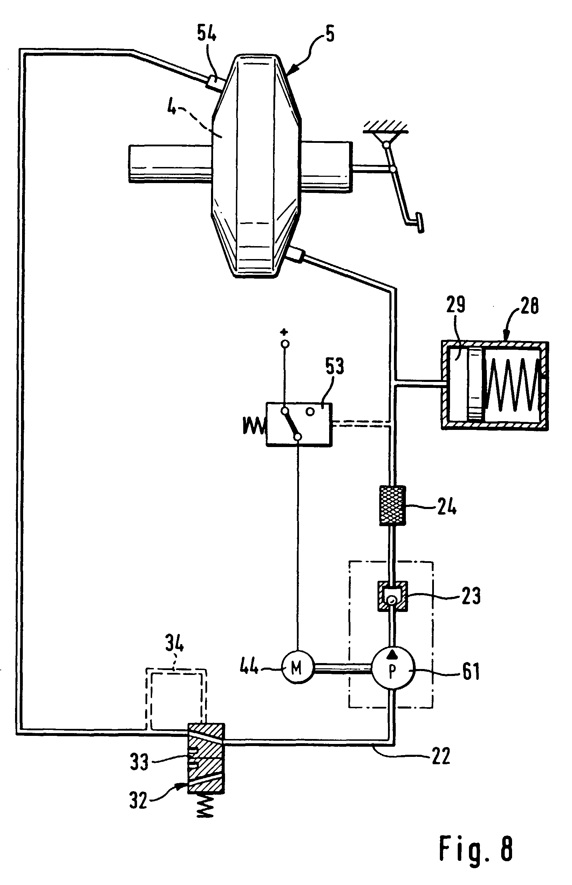

In Fig. 8 ist die aus Fig. 7 bekannte Anordnung zu einem geschlossenen System erweitert. Dazu ist die Saugseite der Überdruckpumpe 61 über die Leitung 22 und die Ventilanordnung 32 mit dem Unterdruckanschluß 54 des Bremskraftverstärkers 5, und somit mit dessen Kammer 4 niedrigeren Druckes verbunden. Die Ventilanordnung 32 besteht aus einem vorgespannten pneumatisch betätigbaren 3/2-Wegeventil, welches in seiner ersten Schaltstellung den Unterdruckanschluß 54 mit der Saugseite der Überdruckpumpe 61 verbindet, während in dessen zweiter Schaltstellung die Saugseite der Überdruckpumpe 61 mit Atmosphäre verbunden ist. Die zweite Schaltstellung des 3/2-Wegeventils 33 wird nach Unterschreiten eines bestimmten tiefsten Druckwertes in der Kammer 4 niedrigeren Druckes über die Steuerungsleitung 34 geschaltet.

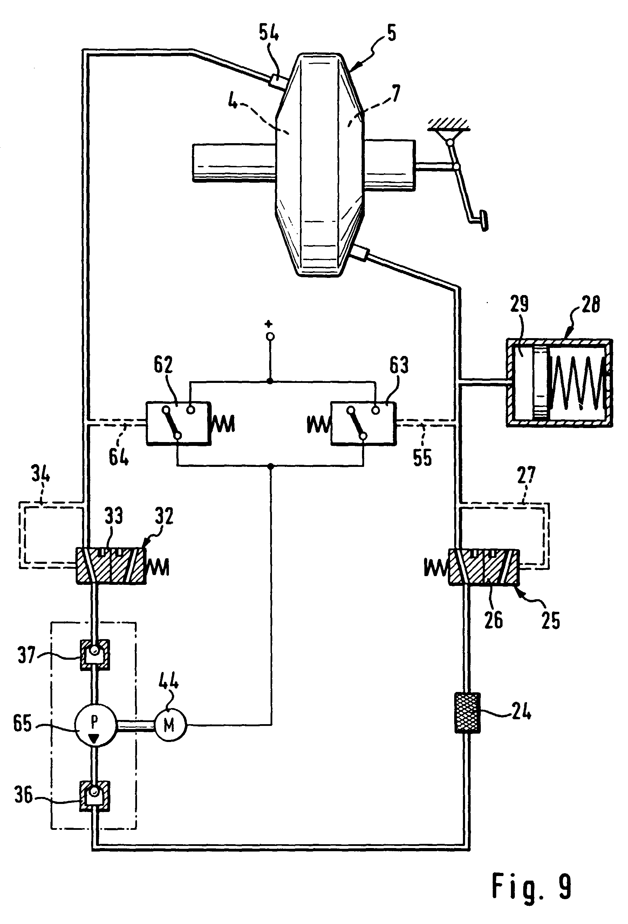

In Fig. 9 ist eine erfindungsgemäße Bremsanlage mit elektromotorisch angetriebener Unter-/Überdruckpumpe 65 abgebildet. Die Druckseite der Überdruckpumpe 65 ist über ein Rückschlagventil 36, einen Lufttrockner 24 und eine Ventilanordnung 25 mit der Kammer 7 höheren Druckes eines Bremskraftverstärkers 5 sowie der Druckkammer 29 eines Druckspeichers 28 verbunden. Die Ventilanordnung 25 besteht aus einem pneumatisch betätigbaren vorgespannten 3/2-Wegeventil 26, welches in seiner ersten Schaltstellung (Ausgangsstellung) die genannte Verbindung herstellt und in seiner zweiten Schaltstellung, die bei Überschreiten eines bestimmten Druckwertes in der Druckkammer 29 eingenommen wird, die Unter-/Überdruckpumpe 65 mit Atmosphäre verbindet. Die Saugseite der Unter-/Überdruckpumpe 65 ist über ein Rückschlagventil 37 und eine Ventilanordnung 32 mit der Kammer 4 niedrigeren Druckes des Bremskraftverstärkers 5 verbunden. Die Ventilanordnung 32 ist als 3/2-Wegeventil 33 ausgebildet, welches in seiner ersten Schaltstellung die genannte Verbindung herstellt, und in seiner zweiten Schaltstellung, die bei Unterschreiten eines bestimmten Druckes in der Kammer 4 eingenommen wird, die Saugseite der Pumpe mit Atmosphäre verbindet.

Der die Unter-/Überdruckpumpe 65 antreibende Elektromotor 44 ist über zwei parallel geschaltete Druckschalter 62,63 mit der Stromversorgung verbunden. Dabei wird die Verbindung über den Schalter 62 hergestellt, wenn der Druck in der Kammer 4 niedrigeren Druckes einen bestimmten Höchstwert überschreitet. Dazu ist der Druckschalter 62 mittels einer Steuerleitung 64 mit dem Unterdruckanschluß 54, d.h. mit der Kammer 4, verbunden. Druckschalter 63 ist über die Steuerleitung 55 mit der Kammer 7 höheren Druckes des Bremskraftverstärkers 5 verbunden und stellt eine Verbindung zur Stromversorgung her, wenn der in der Kammer 7 herrschende Druck einen bestimmten Druckwert unterschreitet. Die Druckschalter 62 und 63 sind elektrisch parallel geschaltet, so daß der Elektromotor 44 eingeschaltet wird, sobald entweder der in der Kammer 4 niedrigeren Druckes herrschende Druck zu hoch oder der in der Kammer 7 höheren Druckes herrschende Druck zu niedrig wird. Eine Minimierung des Energieverbrauchs wird über die Ventilanordnungen 25 bzw. 32 erreicht, deren Funktion (Leerlauf bzw. teilweiser Leerlauf der Pumpe) bereits zu den vorangehenden Abbildungen beschrieben worden ist.

### Bezugszeichenliste

- 1.: Unterdruckpumpe
- 2.: Rückschlagventil
- 3.: Ventilanordnung
- 4: Kammer niedrigeren Druckes
- 5.: Bremskraftverstärker
- 6.: Membran
- 7.: Kammer höheren Druckes
- 8.: Arbeitskolben
- 9.: Kolbenstange
- 10.: Kolben
- 11.: Hauptzylinder
- 12.: Arbeitskammer
- 13.: hydraulische Bremsleitung
- 14.: Radbremse
- 15.: Bremspedal
- 16.: Druckstange
- 17.: Ventilgehäuse
- 18.: Druckanschluß
- 19.: 3/2-Wegeventil
- 20: Steuerungsleitung
- 21.: Überdruckpumpe
- 22.: Leitung
- 23.: Rückschlagventil
- 24.: Lufttrockner
- 25.: Ventilanordnung
- 26.: 3/2-Wegeventil
- 27.: Steuerungsleitung
- 28.: Druckspeicher
- 29.: Druckkammer
- 30.: Leitung
- 31.: Rückschlagventil
- 32.: zweite Ventilanordnung
- 33.: 3/2-Wegeventil
- 34.: Steuerungsleitung
- 35: Unter-/Überdruckpumpe
- 36.: Rückschlagventil
- 37.: Rückschlagventil
- 38.: 4/2-Wegeventil
- 39.: Leitung
- 40.: Ventilanordnung
- 41.: 3/2-Wegeventil
- 42.: Rückschlagventil
- 43.: Leitung
- 44.: Elektromotor
- 45: Freilaufgetriebe
- 46.: hydraulische Pumpe
- 47.: Steuerungseinheit
- 48.: Bremslichtschalter
- 49.: Druckschalter
- 50.: Steuerungsleitung
- 51.: Unterdruckpumpe
- 52.: Rückschlagventil
- 53.: Druckschalter
- 54.: Unterdruckanschluß
- 55.: Steuerungsleitung
- 56.: Stromsensor
- 57.: Steuerungsleitung
- 58.: Motorwelle
- 61.: Überdruckpumpe
- 62.: Druckschalter
- 63.: Druckschalter
- 64.: Steuerungsleitung
- 65.: Unter-/Überdruckpumpe

## Patentansprüche

1. Bremsanlage für Kraftfahrzeuge mit einem pneumatischen Bremskraftverstärker (5) mit zwei Kammern (4,7), von denen eine mit einem niedrigeren und die andere mit einem höheren Druck beaufschlagbar sind und von denen mindestens eine mit einer pneumatischen Pumpe (1,21,35,51,61,65) verbindbar ist, wobei Mittel vorgesehen sind, die die Pumpe (1,21,35,51,61,65) in Abhängigkeit von dem in der ihr zugeordneten Kammer (4,7) herrschenden Druck an- bzw. abschalten, dadurch **gekennzeichnet**, daß die Pumpe (1,21,35,51,61,65) von einem eine hydraulische Pumpe (46) einer schlupfregelten Bremsanlage antreibenden Elektromotor (44) angetrieben wird.

2. Bremsanlage nach Anspruch 1 dadurch **gekennzeichnet** daß die Mittel durch einen die Leistungsaufnahme des Elektromotors (44) erfassenden Sensor (56) gebildet sind.

3. Bremsanlage nach einem der Ansprüche 1 oder 2, dadurch **gekennzeichnet**, daß die Pumpe (1,21,35,51,61,65) als Überdruckpumpe (61) ausgebildet ist, deren Druckseite an die Kammer (7) höheren Druckes und deren Saugseite über eine durch den in der Kammer (4) niedrigeren Druckes herrschenden Druck betätigbare Ventilanordnung (32) an die Kammer (4) niedrigeren Druckes angeschlossen ist

4. Bremsanlage nach Anspruch 3, dadurch **gekennzeichnet**, daß die Ventilanordnung (32) in einer ersten Schaltstellung die Saugseite der Überdruckpumpe (61) mit der Kammer (4) niedrigeren Druckes und in einer zweiten Schaltstellung mit Atmosphäre verbindet.

5. Bremsanlage nach Anspruch 1, dadurch **gekennzeichnet**, daß die Pumpe (1,21,35,51,61,65) als mit beiden Kammern (4,7) in Verbindung stehende Unter-/Überdruckpumpe (65) ausgebildet ist, wobei den beiden Kammern (4,7) elektrisch parallel geschaltete Druckschalter (62,63) zugeordnet sind, die durch die in den Kammern (4,7) herrschenden Drücke betätigbar sind, wobei in den Verbindungen zwischen den Kammern (4,7) und der jeweiligen (Saug-, Druck-) Seite der Unter-/ Überdruckpumpe (65) jeweils eine durch den in der zugeordneten Kammer (4,7) herrschenden Druck betätigbare Ventilanordnung (32,35) geschaltet ist, die in einer ersten Schaltstellung die Unter-/ Überdruckpumpe (65) mit der zugeordneten Kammer (4,7) und in einer zweiten Schaltstellung mit Atmosphäre verbindet.

6. Bremsanlage nach einem der vorhergehenden Ansprüche, dadurch **gekennzeichnet**, daß an die pneumatische Kammer (4,7) ein Druckspeicher (28) angeschlossen ist.

7. Bremsanlage nach einem der vorhergehenden Ansprüche, dadurch **gekennzeichnet**, daß der Druckseite der Pumpe (51,61,65) ein Lufttrockner (24) nachgeschaltet ist.

8. Bremsanlage nach einem der vorhergehenden Ansprüche, dadurch **gekennzeichnet**, daß die Ventilanordnung (3,25) in dem Bremskraftverstärker (5) integriert ist.

9. Bremsanlage nach einem der vorhergehenden Ansprüche, dadurch **gekennzeichnet**, daß die Pumpe (1,21,35,51, 61,65) in den Bremskraftverstärker (5) integriert ist.

10. Bremsanlage nach einem der Ansprüche 6 bis 9, dadurch **gekennzeichnet**, daß der Druckspeicher in den Bremskraftverstärker (5) integriert ist.

11. Bremsanlage nach Anspruch 1, dadurch **gekennzeichnet**, daß zwischen dem Motor (44) und der hydraulischen Pumpe (46) ein Freilaufgetriebe (45) angeordnet ist.

12. Bremsanlage nach Anspruch 1, dadurch **gekennzeichnet**, daß die Pumpe (51) und die hydraulische Pumpe (46) an den entgegengesetzten Enden der Motorwelle (58) des Motors (44) angeordnet sind.

13. Bremsanlage nach einem der vorhergehenden Ansprüche, dadurch **gekennzeichnet**, daß Mittel vorgesehen sind, die die Pumpe (51,61,65) in regelmäßigen zeitlichen Abständen an- und abschalten.

14. Bremsanlage nach Anspruch 13, dadurch **gekennzeichnet**, daß die Mittel durch einen Bremslichtschalter gebildet sind.

## Claims

1. Brake system for automotive vehicles with a pneumatic brake power booster (5) including two chambers (4,7), one of the chambers being adapted to be acted upon by a low pressure and the other one by a higher pressure, and at least one of the chambers being adapted to be connected to a pneumatic pump (1,21,35,51,61,65), wherein a means is provided to activate and deactivate the pump (1,21,35,51,61,65) in response to the pressure prevailing in the chamber (4,7) associated with the pump,
**characterized** in that the pump (1,21,35,51,61,65) is operated by an electric motor (44) driving a hydraulic pump (46) of a slip-controlled brake system.

2. Brake system as claimed in claim 1,
**characterized** in that the means is a sensor (56) sensing the power input of the electric motor (44).

3. Brake system as claimed in any one of claims 1 or 2,
**characterized** in that the pump (1,21,35,51,61,65) is configured as an excess pressure pump (61) having its pressure side connected to the high pressure chamber (7) and its suction side connected to the low pressure chamber (4) by way of a valve assembly (32) operable by the pressure that prevails in the low pressure chamber (4).

4. Brake system as claimed in claim 3,
**characterized** in that the valve assembly (32) connects the suction side of the excess pressure pump (61) to the low pressure chamber (4) in a first switch position and to the atmosphere in a second switch position.

5. Brake system as claimed in claim 1,
**characterized** in that the pump (1,21,35,51,61,65) is configured as a vacuum/excess pressure pump (65) which is in connection with both chambers (4,7), and associated with the two chambers (4,7) are pressure switches (62,63) which are electrically parallel connected and operable by the pressures prevailing in the chambers (4,7), and a valve assembly (32,35) that is operable by the pressure prevailing in the associated chamber (4,7) is interposed into the connections between the chambers (4,7) and the respective (suction, pressure) side of the vacuum/excess pressure pump (65), the valve assembly (32,35) connecting the vacuum/excess pressure pump (65) to the associated chamber (4,7) in a first switch position and to the atmosphere in a second switch position.

6. Brake system as claimed in any one of the preceding claims,
**characterized** in that a pressure accumulator (28) is connected to the pneumatic chamber (4,7).

7. Brake system as claimed in any one of the preceding claims,
**characterized** in that an air dryer (24) is connected downstream of the pressure side of the pump (51,61,65).

8. Brake system as claimed in any one of the preceding claims,
**characterized** in that the valve assembly (3,25) is integrated in the brake power booster (5).

9. Brake system as claimed in any one of the preceding claims,
**characterized** in that the pump (1,21,35,51,61,65) is integrated into the brake power booster (5).

10. Brake system as claimed in any one of claims 6 to 9,
**characterized** in that the pressure accumulator is integrated into the brake power booster (5).

11. Brake system as claimed in claim 1,
**characterized** in that a freewheeling drive (45) is interposed between the motor (44) and the pump (46).

12. Brake system as claimed in claim 1,
**characterized** in that the pump (51) and the hydraulic pump (46) are mounted on the opposite ends of the motor shaft (58) of the motor (44).

13. Brake system as claimed in any one of the preceding claims,
**characterized** in that a means is provided to activate and deactivate the pump (51,61,65) in regular intervals.

14. Brake system as claimed in claim 13,
**characterized** in that the means is a brake light switch.

## Revendications

1. Système de freinage pour véhicules automobiles, comprenant un amplificateur pneumatique d'effort de freinage (5) ayant deux chambres (4, 7), dont l'une peut être soumise à une pression plus basse et l'autre peut être soumise à une pression plus élevée, et dont l'une au moins peut être reliée à une pompe pneumatique (1, 21, 35, 51, 61, 65), des moyens étant prévus pour mettre en marche et pour arrêter la pompe (1, 21, 35, 51, 61, 65) en fonction de la pression régnant dans la chambre (4, 7) qui lui est associée,
caractérisé en ce que la pompe (1, 21, 35, 51, 61, 65) est entraînée par un moteur électrique (44) entraînant une pompe hydraulique (46) d'un système de freinage à régulation antipatinage.

2. Système de freinage selon la revendication 1, caractérisé en ce que les moyens sont constitués par un capteur (56) détectant la puissance absorbée par le moteur électrique (44).

3. Système de freinage selon l'une des revendications 1 ou 2, caractérisé en ce que la pompe (1, 21, 35, 51, 61, 65) est réalisée sous forme d'une pompe refoulante (61), dont le côté refoulement est relié à la chambre (7) à pression élevée, et dont le côté aspiration est relié à la chambre basse pression (4) par l'intermédiaire d'un agencement de valve (32) piloté par la pression régnant dans la chambre basse pression (4).

4. Système de freinage selon la revendication 3, caractérisé en ce que, dans une première position de commutation, l'agencement de valve (32) relie le côté aspiration de la pompe refoulante (61) à la chambre basse pression (4), et le relie à l'atmosphère dans une seconde position de commutation.

5. Système de freinage selon la revendication 1, caractérisé en ce que la pompe (1, 21, 35, 51, 61, 65) est réalisée sous forme d'une pompe à vide/ pompe refoulante (65) communiquant avec les deux chambres (4, 7), des manocontacteurs (62, 63) branchés électriquement en parallèle étant associés aux deux chambres (4, 7), les manocontacteurs pouvant être actionnés par les pressions régnant dans les chambres (4, 7), un agencement de valve (32, 35), pouvant être actionné par la pression régnant dans la chambre correspondante (4, 7), étant respectivement intercalé dans la liaison entre les chambres (4, 7) et le côté respectif (côté aspiration, côté refoulement) de la pompe à vide/ pompe refoulante (65), l'agencement de valve reliant, dans une première position de commutation, la pompe à vide/ pompe refoulante (65) à la chambre associée (4, 7), et la reliant, dans une seconde position de commutation, à l'atmosphère.

6. Système de freinage selon l'une des revendications précédentes, caractérisé en ce qu'un accumulateur de pression (28) est raccordé à la chambre pneumatique (4, 7).

7. Système de freinage selon l'une des revendications précédentes, caractérisé en ce qu'un dessiccateur d'air (24) est branché en aval du côté refoulement de la pompe (51, 61, 65).

8. Système de freinage selon l'une des revendications précédentes, caractérisé en ce que l'agencement de valve (3, 25) est intégré dans l'amplificateur d'effort de freinage (5).

9. Système de freinage selon l'une des revendications précédentes, caractérisé en ce que la pompe (1, 21, 35, 51, 61, 65) est intégrée dans l'amplificateur d'effort de freinage (5).

10. Système de freinage selon l'une des revendications 6 à 9, caractérisé en ce que l'accumulateur de pression est intégré dans l'amplificateur d'effort de freinage (5).

11. Système de freinage selon la revendication 1, caractérisé en ce qu'un mécanisme à roue-libre (45) est agencé entre le moteur (44) et la pompe hydraulique (46).

12. Système de freinage selon la revendication 1, caractérisé en ce que la pompe (51) et la pompe hydraulique (46) sont respectivement disposées aux extrémités opposées de l'arbre moteur (58) du moteur (44).

13. Système de freinage selon l'une des revendications précédentes, caractérisé en ce que des moyens sont prévus, qui mettent en marche et arrêtent la pompe (51, 61, 65) à intervalles de temps réguliers.

14. Système de freinage selon la revendication 13, caractérisé en ce que les moyens sont constitués par un contacteur de feux stop.
